# FASCICULE DE BREVET EUROPEEN

(11) **EP 1 168 908 B1**
(45) Date de publication et mention de la délivrance du brevet: **02.08.2006**
(21) Numéro de dépôt: 00918614.9
(22) Date de dépôt: 12.04.2000
(51) Int. Cl.: A01D 34/00

(54) **AMELIORATIONS A UNE TONDEUSE ROBOTIQUE**
VERBESSERUNG EINES SELBSTGESTEUERTEN RASENMÄHERS
IMPROVEMENTS TO A SELF-PROPELLED LAWN MOWER

(30) Priorité: 12.04.1999 BE 9900247; 15.06.1999 BE 9900409
(43) Date de publication de la demande: 09.01.2002
(73) Titulaire: Solar & Robotics S.A., 1330 Rixensart (BE)
(72) Inventeur: COLENS, André, B-1330 Rixensart (BE)
(74) Mandataire: Colens, Alain M.G.M.
(86) Numéro de dépôt international: PCT/BE2000/000034
(87) Numéro de publication internationale: WO 2000/060921

(56) Documents cités:
- WO-A-98/41081
- US-A- 3 548 570
- US-A- 4 817 372

## Description

La présente invention se rapporte à une tondeuse robotique améliorée et plus particulièrement adaptée à l'entretien de grandes surfaces.

Pour l'entretien de grandes surfaces de pelouses, de l'ordre de plusieurs hectares, on a généralement recours a des tondeuses motorisées et autotractées avec conducteurs. L'utilisation dans ce but de tondeuses robotiques présenterait de nombreux avantages, notamment du point de vue de la main d'oeuvre et de la nuisance environnementale.

Les tondeuses robotiques divulguées à ce jour, par exemple dans le document EP 0 550 473 B1, présentent cependant certains inconvénients pour l'utilisation sur des grandes surfaces. La largeur de coupe de la machine et la puissance de celle-ci doit être augmentée. Cela nécessite le recours à de nouvelles solutions.

Ainsi, l'utilisation de tondeuses robotiques de grande dimension ,p.e. de 80 cm à 200 cm de largeur, entraîne un problème de sécurité du à la puissance des moyens de coupe de l'engin. Ce problème peut être résolu en divisant le système de coupe en un grand nombre d'éléments indépendants, présentant chacun une puissance réduite et des lames autorétractables. Un tel système est proposé par exemple dans la demande PCT/BE98/00038.

D'autres problèmes subsistent cependant. Il en est ainsi du "scalpage" de l'herbe provoqué par un système de tonte rotatif dans dés pelouses irrégulières, le problème du réglage précis et conjoint d'un grand nombre de têtes de coupe, et l'absence d'autoadaptation à la hauteur de l'herbe. Ce dernier aspect est important pour des robots destinés à travailler de manière intermittente sur de grandes surfaces, la hauteur de l'herbe pouvant varier selon la période, le temps de fonctionnement du robot et l'endroit précis de la pelouse.

Par ailleurs, les roues motrices d'une tondeuse robotique de grande dimension sont généralement les deux roues arrières, de diamètre généralement bien supérieur à celui des roues libres avant.

Ces roues ont tendance a fournir un couple de basculement vers le haut, de l'avant de l'engin quand une plusieurs têtes de coupe heurtent une irrégularités du sol. Il en résulte un manque de stabilité horizontal et un tressautement de l'avant de l'engin durant sa progression.

Ces inconvénients sont plus particulièrement, mais pas uniquement, liés aux tondeuses robotiques de grandes dimensions. Les solutions proposées par l'invention peuvent donc avantageusement s'appliquer à des engins de plus petites dimensions.

La présente invention propose un engin robotique mobile de tonte de pelouses comprenant un microprocesseur et au moins une tête de coupe, et dans lequel il est prévu un élément élastique en tension, solidaire d'une part au châssis de l'engin et d'autre part à au moins la tête de coupe. Cette tondeuse robotique est caractérisée en ce que
la hauteur de coupe de la ou des têtes de coupe est commandée automatiquement de manière centralisée en fonction d'un algorithme, traité par ledit microprocesseur.
Cet algorithme prend en compte la résistance à la rotation du disque de coupe et/ou la position de l'engin sur ladite surface, de telle sorte que la tondeuse ne coupe le gazon jamais plus qu'une hauteur prédéfinie à la fois.

D'autres aspects de l'invention sont formulés dans les revendications dépendantes en annexes.

La tondeuse peut comprendre les caractéristiques additionnelles suivantes :
- les têtes de coupe sont des têtes à disque rotatifs, les disques étant munis à leurs périphérie d'un nombre variable de petits couteaux rétractables , par exemple trois couteaux, qui s'étendent en position de coupe sous l'effet de la force centrifuge,
- on prévoit une butée centrale localisée ou intégrée sous l'élément de coupe de la tête et permettant à chaque tête de suivre le relief de la pelouse indépendamment,
- le réglage précis et conjoint de la hauteur d'une multiplicité de têtes de coupe est obtenu en utilisant une butée longitudinale sur laquelle prennent appui latéralement les différentes têtes, ou des éléments y associés, permettant un réglage centralisé tout en autorisant un mouvement indépendant pour chaque tête

La combinaison de certaines ou de l'ensemble de ces différentes caractéristiques originales permet d'obtenir un engin robotique efficace tout en restant de construction simple et de puissance acceptable.

Les têtes, p.e. au nombre de cinq, peuvent être assemblées le long d'une seule ligne transversale par rapport à l'avancement de l'engin châssis, ou en plusieurs lignes avec décalage.

Les têtes de coupe sont fixées indépendamment à un châssis de la tondeuse, par exemple un châssis tubulaire en aluminium, par un assemblage en pivotement libre par rapport à un ou des montants transversaux. Cette solidarisation peut se faire par l'intermédiaire de bras parallèles formant un parallélogramme et articulés à des points de rotation sur le montant transversal. Ce montage permet un mouvement limité de translation vertical de la tête, assurant ainsi une certaine flottabilité par rapport aux irrégularités du sol.

Selon l'invention, on prévoit les dites têtes de coupe solidaires de liens élastiques, par exemple de ressorts, permettant de compenser au moins partiellement le poids de la tête. Les ressorts peuvent être par exemple à traction ou à torsion. De cette manière, le poids apparent de la tête de coupe, c'est à dire l'effort à exercer pour la soulever sous l'effet du contact de la butée centrale avec le sol, est considérablement réduit. En considérant un poids initial d'une tête de coupe de 1 kg une compensation adéquate permet, par exemple, de ramener l'effort de soulèvement à quelques centaines de grammes.

Cet aspect de l'invention, permet d'augmenter la stabilité horizontale de l'engin en diminuant l'effet de couple de soulèvement de l'avant provoqué par les roues de traction arrière. Cet effet peut être très gênant lors d'une progression en pente, que l'engin peut emprunter jusqu'à 35 %. Le tressautement lors de l'évolution sur un terrain irrégulier en est fortement diminué.

L'engin robotique peut comprendre une butée centrale localisée ou intégrée sous l'élément de coupe de la tête et permettant à chaque tête de suivre le relief de la pelouse indépendamment et sans frottement excessif. Selon un premier mode de mise en oeuvre la butée consiste en un bossage central, p.e. de forme quasi hémisphérique, faisant partie, prévue intégrée ou rendue solidaire au centre de la' face inférieure du disque de coupe. Cette butée, en saillie (p.e. de 2 à 4 cm) est donc en rotation, même lorsqu'elle est occasionnellement en contact avec le sol.

La butée centrale permet avantageusement de ramener tout frottement vers le centre de rotation du disque et permet ainsi de diminuer le couple de frottement et son effet de freinage sur la rotation du disque.

Selon un second mode de réalisation, la butée est prévue sur un deuxième disque, coaxial au disque de coupe, localisé sous ce dernier. Le deuxième disque est avantageusement en rotation libre par rapport au disque de coupe. Un arrangement analogue, constituant déjà un système anti-scalpage, autonettoyant par expulsion centrifuge des débris, mais sans butée centrale, est divulgué dans la demande PCT/BE96/00012.

Dans les deux modes susmentionnés, en cas de contact du disque de coupe ou du disque en rotation libre avec le sol, le couple exercé sur l'axe du ou des disques est moins important ou est éliminé car le contact se fait essentiellement ou uniquement sur la butée centrale.

On notera que les butées centrales susdites peuvent être prévues indépendamment réglables, ou interchangeables par exemple par simple clipsage, de façon à s'adapter à la nature de pelouses d'irrégularités différentes et de s'adapter à la hauteur minimale de tonte souhaitée.

Selon l'invention, on prévoit un système de commande centralisée pour les têtes de coupe. Selon un mode de réalisation, une plaque transversale d'arrêt ou butée sur laquelle s'appuie latéralement un élément de la tête de coupe ou un élément solidaire, p.e. rigidement, de la tête de coupe, permettant de définir une valeur minimale de la distance entre la tête et le sol. Cette plaque d'arrêt peut être réglée en hauteur.

Selon un mode de réalisation simplifié, une tige peut être réglée manuellement et permet d'agir, via un mécanisme simple connu en soi, sur la hauteur de la plaque d'arrêt et donc sur la valeur de la hauteur nominale des têtes de coupe par rapport au sol.

Selon l'invention cette tige est directement commandée par un moteur et un boîtier de contrôle électronique, ce qui permet un réglage automatique de la ou des têtes de coupe en fonction d'un algorithme présent dans l'ordinateur de bord, algorithme prenant en compte par exemple la vitesse de l'engin et/ou la résistance à la rotation du disque de coupe et/ou l'inclinaison de l'engin et/ou le degré d'humidité de la surface à tondre.

En effet, le principe de tonte utilisé par les tondeuses robotiques de la présente invention fait avantageusement appel à des tontes fréquentes, parfois même permanentes. Le robot coupe peu à peu à chaque passage, le ramassage est donc inutile, les déchets de l'herbe se décomposant et fertilisent la pelouse au fur et à mesure de sa production.

Il arrive toutefois qu'en début de saison, ou suite à un arrêt prolongé de la machine, ou encore une nouvelle définition de la surface à tondre, l'herbe ait poussé ou soit trop haute et que la machine réglée à sa hauteur nominale (p.e. au moyen d'un levier) coupe une hauteur d'herbe trop importante, entraînant un aspect inesthétique, et une grande quantité de déchets d'herbe détériorant celle-ci. Le procédé de gestion proposé par l'invention permet de pallier ces inconvénients.

Selon ce procédé de gestion automatique, lors de la mise en route de la tondeuse, le microprocesseur commande le relèvement de la tête ou des têtes de coupe à leur hauteur maximum. Ce n'est qu'après le démarrage que les têtes seront abaissées.

Le microprocesseur analyse constamment la vitesse moyenne de rotation du ou des disques de coupe. Tant que celle-ci est supérieure à une valeur prédéfinie Vr, valeur qui correspond à la vitesse des têtes coupant une hauteur de gazon qu'on ne doit pas dépasser, le microprocesseur continue à commander l'abaissement des têtes de manière à tendre vers la valeur de consigne nominale. Si la vitesse moyenne de rotation descend en dessous de Vr, l'abaissement est arrêté et ne reprendra que lorsque la résistance à la coupe aura diminué.

Grâce à ce dispositif la tondeuse ne coupe jamais plus qu'une hauteur prédéfinie à la fois et la hauteur du gazon tend progressivement vers sa valeur nominale tout en gardant un aspect esthétique.

Le dispositif présenté permet donc d'améliorer le caractère auto-adaptatif de la machine. En plus d'une tonte régulière, le microprocesseur peut également exploiter le dispositif pour améliorer le passage d'obstacle, se dégager d'une souche d'arbre, ou passer au dessus d'un tapis de feuilles mortes.

Ce dernier cas est particulièrement avantageux, la présence de tapis de feuilles étant la source de nombreuses difficultés de fonctionnement pour une tondeuse robotique autonome de puissance limitée. En automne, de larges tapis de feuilles mortes apparaissent au pied et alentours des arbres. Lorsque le robot passe dans ce tapis, une quantité substantielle de feuilles peut se prendre dans la ou les têtes de coupe ce qui peut provoquer occasionnellement un blocage et l'arrêt de la machine. Selon l'invention, lorsque le microprocesseur détecte une résistance supérieure à la normale au niveau des disques de coupe et ce sur une certaine distance, le microprocesseur commande au moteur pas à pas un relèvement de la ou des têtes au maximum avant de les rabaisser progressivement selon la technique susmentionnée.

L'invention sera mieux comprise à l'examen des dessins présentés à titre d'exemple uniquement.
La Fig. 1 représente schématiquement une tête de coupe.
La Fig. 2 représente une coupe schématique en élévation d'une tondeuse robotique selon l'invention.
La Fig. 3 représente une coupe schématique en plan de la tondeuse de la Fig. 2.
La Fig. 4 représente une variante préférée incorporant un système automatique de réglage de la hauteur de coupe.
La Fig. 5 représente un diagramme de blocs illustrant un algorithme simplifié de la gestion automatique de la hauteur de la tête de coupe.

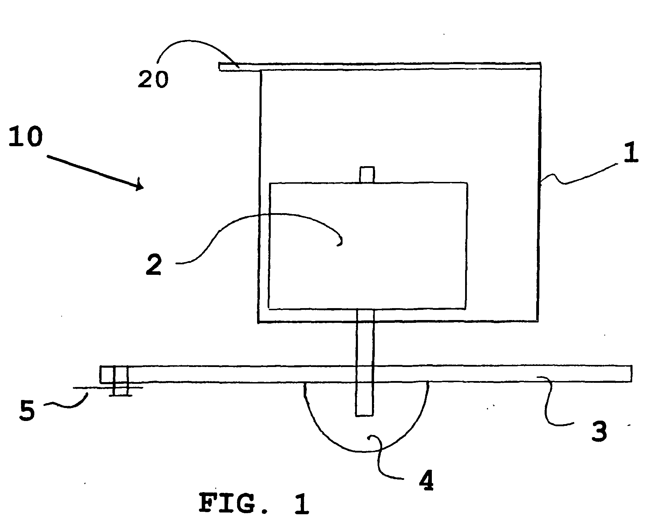

A la Fig. 1, on illustre schématiquement une tête de coupe 10 se composant d'un boîtier 1 protégeant un moteur électrique 2 entraînant un disque de coupe 3 muni de lames rétractables 5 et d'une butée centrale de forme approximativement hémisphérique 4 pouvant venir en contact avec le sol.

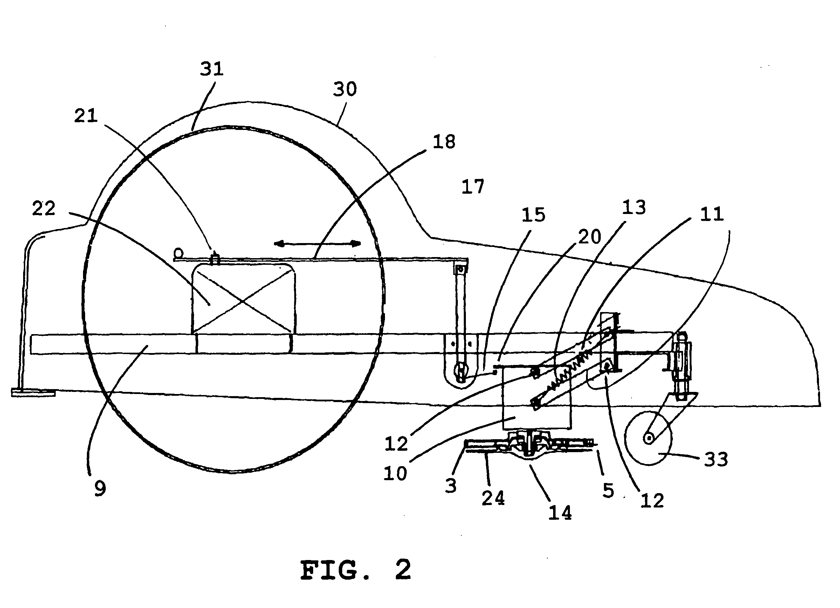

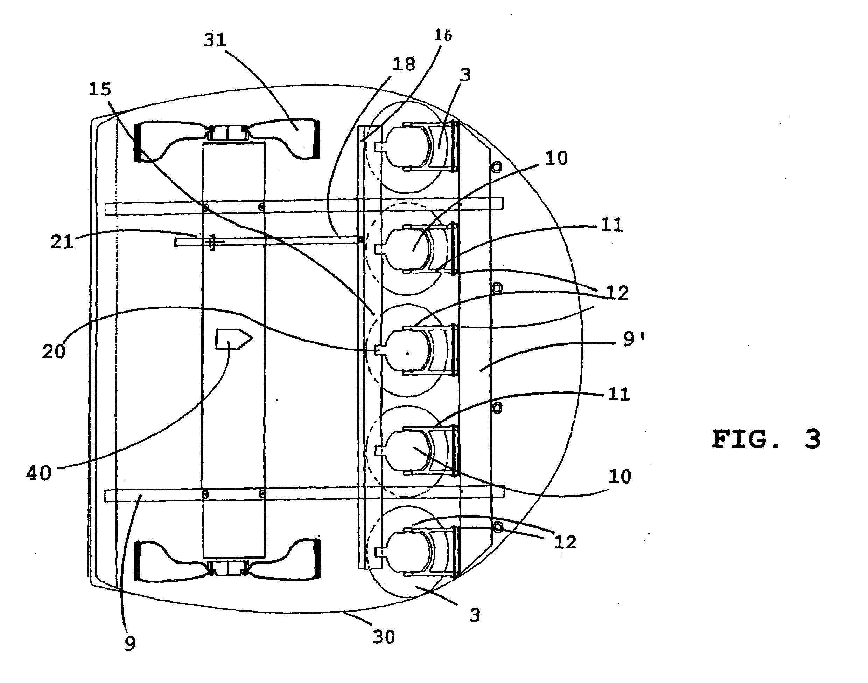

En se référant aux Figs 2 à 4, on illustre une coupe schématique transversale d'une tondeuse robotique selon l'invention. Les dimensions sont par exemple de 1,2 m de longueur, 1,16 m de largeur et 0,5 m de hauteur. Le poids avec batterie variera de 40 à 50 kg. On distincte un carénage 30, des roues folles 33 à l'avant et deux roues motrices arrières 31 avec motoréducteurs intégrés, le contrôle de direction étant effectué par asservissement de la différence de vitesse des roues motrices. L'engin étant plus lourd et pouvant évoluer à une vitesse supérieure que celle des petites tondeuses robotiques, on prévoit sur la partie supérieure du carénage un sonar 40 permettant de détecter à distance les obstacles physiques, et ainsi de diminuer la vitesse lors de leurs approches.

Dans la Fig. 2 le disque de coupe 3 est disposé au dessus d'un plateau ou disque coaxial 24 en rotation libre, et muni d'une butée centrale 14.

Les têtes de coupe 10 sont fixées au châssis tubulaire de la tondeuse (longerons 9 et traverses 9') par l'intermédiaire de bras parallèles 11 formant un parallélogramme et articulés aux points de rotation 12. Ce montage permet un mouvement de translation vertical de la tête par rapport au châssis.

On illustre également des liens élastiques sous la forme de ressorts de traction 13, permettant de compenser au moins partiellement le poids de la tête et donc de stabiliser l'engin sur un sol irrégulier.

Une plaque d'arrêt ou butée latérale 15 sur laquelle bute un extension 20 de la tête de coupe, permet de définir une valeur minimale de la distance entre la tête et le sol. Cette plaque d'arrêt peut être réglée en hauteur, de 25 à 65 mm, par pivotement autour de l'axe 16 sous l'effet d'un le levier 17, lui-même actionné par l'intermédiaire de la tige 18. Le bord de la plaque d'arrêt destiné à recevoir en butée les extensions 20 des têtes de coupe 10, est avantageusement recouvert d'une gaine de caoutchouc (non illustrée) pour amortir les chocs dues aux irrégularités du terrain..

Selon un mode de réalisation simplifié, la tige 18 agit sur la hauteur nominale de la ou des têtes de coupe 1 par réglage manuel grâce à une vis de réglage 21 (fig. 2). La tige comprend plusieurs trous sur sa longueur aptes à recevoir une vis de blocage permettant plusieurs possibilités de blocage en translation, c'est à dire via le levier, plusieurs hauteurs nominales des têtes de coupe.

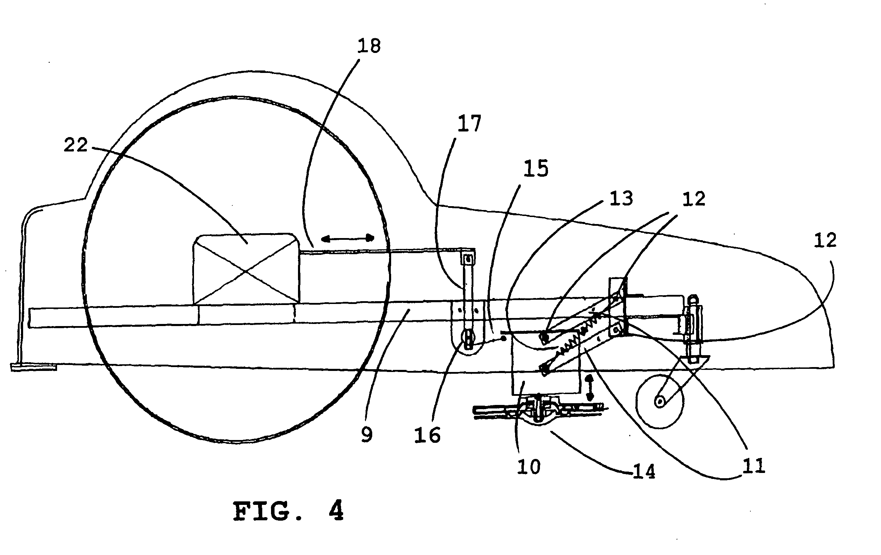

Selon une variante (fig. 4) particulièrement avantageuse, on prévoit plutôt un réglage automatique, contrôlé par un ordinateur de bord. La tige 18 rentre alors dans le boîtier de contrôle électronique 22. Cette tige 18 est actionnée par un moteur pas à pas linéaire permettant un déplacement avant-arrière de la tige 18 et donc, par un simple système de levier 17, un contrôle de la hauteur nominale des têtes 10 reposant sur la butée 15 via les extensions latérales 20.

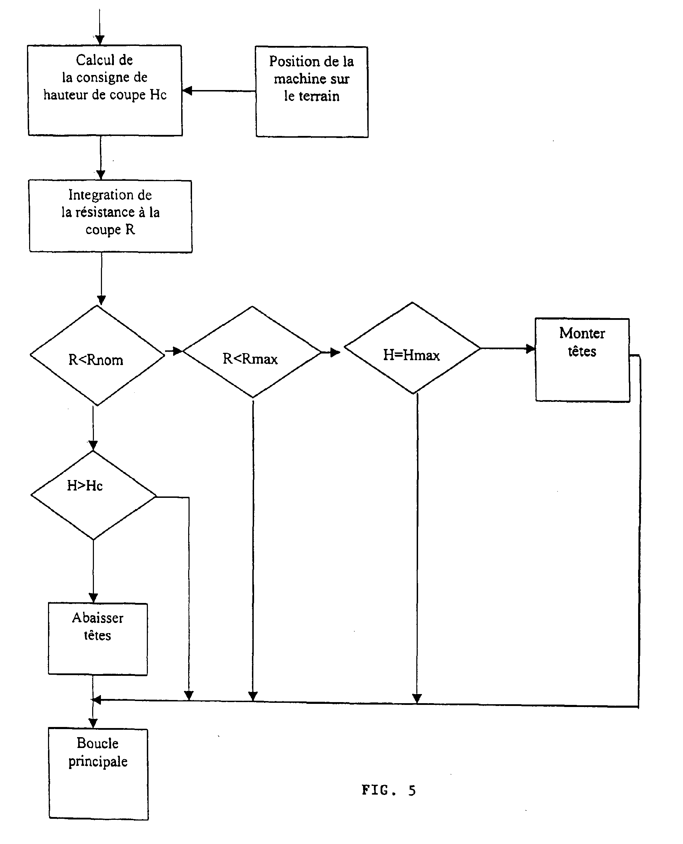

La Fig. 5 représente un diagramme de blocs illustrant un algorithme simplifié de la gestion automatique de la hauteur de la tête de coupe. Une consigne de hauteur de coupe Hc est introduite ou calculée automatiquement en fonction de la position de la machine sur le terrain. La machine intègre constamment la résistance à la coupe R. Si cette résistance est inférieure à une résistance nominale Rnom et que la hauteur est supérieure à la consigne, la tête de coupe est abaissée. Si la résistance n'est pas inférieure à la résistance nominale, si elle est supérieure à une résistance maximale Rmax et si la hauteur n'est pas déjà égale à la hauteur maximum, le système fait monter les têtes de coupes.

L'engin robotique selon la présente invention est particulièrement bien adapté pour l'entretien de surfaces d'herbe de grandes dimensions telles qu'elles se présentent sur des terrains de golf.

L'entretien des golfs représente une charge de main d'oeuvre importante et l'automatisation constitue un avantage évident.

La tonte des "fairways" peut ainsi représenter environ 80% des charges d'entretien et comporte des exigences très particulières. L'une de celles-ci consiste à obtenir une tonte à hauteur dégressive depuis la périphérie jusqu'au centre du fairway. Il s'agit par exemple d'une tonte à 8 cm en périphérie et ce sur 4 mètres de largeur, ensuite 6 cm sur les 4 m de largeur suivants vers le centre, 4 cm sur les 4 mètres suivants et 2 cm au centre.

La commande automatique de hauteur, éventuellement combiné à la tonte en bandes circulaires telle que décrite dans la présente demande permet une gestion entièrement automatique de ce type de tonte.

Grâce à la mesure constante du champ d'un fil périphérique de délimitation de la surface de travail tel que décrit dans les brevets EP 0550 473 B1 et 0 744 093 B1, la machine calcule constamment sa distance par rapport au fil et peut donc agir sur la hauteur de coupe en fonction de cette distance.

La tonte se déroulera en bandes parallèles à partir de la périphérie avec une hauteur de coupe dégressive, de manière quasi-continue ou par plateaux comme il est décrit ci-dessus.

## Revendications

1. Engin robotique mobile de tonte de pelouses comprenant un microprocesseur et élément une tête de coupe (10), dans lequel il est prévu un élément élastique en tension (13), solidaire d'une part au châssis de l'engin et d'autre part à au moins la tête de coupe (10) **caractérisé en ce que**
la hauteur de coupe de la ou des têtes de coupe (10) est commandée automatiquement de manière centralisée en fonction d'un algorithme, traité par ledit microprocesseur, prenant en compte la résistance à la rotation du disque de coupe (3) et/ou la position de l'engin sur ladite surface, et de telle sorte que la tondeuse ne coupe le gazon jamais plus qu'une hauteur prédéfinie à la fois.

2. Engin selon la revendication 1 dans lequel
le microprocesseur est associé à un moyen de détermination de la position de l'engin sur une surface de travail prédéterminée et gère automatiquement la hauteur de coupe de la ou desdites têtes de coupe (10) au moins en fonction de cette position.

3. Engin selon la revendication 2 **caractérisé en ce que** la position est déterminée par un moyen de mesure de l'intensité d'un champ magnétique émis par un fil périphérique de délimitation de la surface de travail.

4. Engin selon la revendication 1 dans lequel l'algorithme traité par le microprocesseur comprend un procédé de gestion automatique de la hauteur de coupe dans lequel, lors de la mise en route de la tondeuse, le microprocesseur commande le relèvement de la tête ou des têtes de coupe (10) à une hauteur maximum, celles-ci étant par après progressivement abaissées, le microprocesseur analysant constamment la vitesse moyenne de rotation du ou des disques de coupe (3), et tant que celle-ci est supérieure à une valeur prédéfinie Vr, valeur qui correspond à la vitesse des têtes (10) coupant une hauteur de gazon qu'on ne doit pas dépasser, le microprocesseur continue à commander l'abaissement des têtes (10) de manière à tendre vers une valeur de consigne nominale, et dans lequel si la vitesse moyenne de rotation descend en dessous de Vr, l'abaissement est arrêté et ne reprend que lorsque la résistance à la coupe a diminué.

5. Engin robotique mobile de tonte selon la revendication 1 comprenant au moins deux têtes de coupe (10).

6. Engin selon la revendication 1 ou 2 dans lequel il y a au moins trois têtes de coupe (10).

7. Engin selon n'importe laquelle des revendications précédentes **caractérisé en ce que** la ou les têtes de coupe (10) sont constituées d'un disque (3) rotatif à couteaux rétractables présentant une butée (4) sous la face inférieure sous la forme d'une extension centrale apte à entrer en contact avec le sol.

8. Utilisation d'un engin selon n'importe laquelle des revendications 1 à 6 pour la tonte de fairways d'un terrain de golf.

## Claims

1. A movable robotic device for mowing a lawn comprising a microprocessor and at least one cutting head (10), and wherein a tension elastic member (13) is provided, which is integral on the one hand to the device chassis and on the other hand to at least said one cutting head (10),
**characterised in that** the cutting height of the cutting head/s (10) is automatically controlled in a centralized way depending on an algorithm, handled by said microprocessor, taking into account the resistance to rotation of the cutting disk (3) and/or the position of the device on said surface, in such a way that the mower cuts the grass no more than by a predetermined height at a time.

2. Device according to claim 1 wherein the microprocessor is associated to a means of determining the position of the device on a predetermined working surface and controls automatically the cutting height of the said cutting head/s (10) at least as a function of this position.

3. Device according to claim 2 **characterised in that** the position is determined by the intensity of a magnetic field emitted by a peripheral wire which delimits said working surface.

4. Device according to claim 1 wherein the algorithm handled by the microprocessor comprises a process for the automatic control of the cutting height wherein when
the lawnmower is started, the microprocessor controls the cutting head/s to lift through a maximum height, the latter being later progressively lowered, while the microprocessor constantly analyzes an average rotational speed of the cutting disk/s (3), and as long as the latter is above a predetermined value Vr, which corresponds to the speed of cutting disk/s (10) when they cut a grass height not to be exceeded, the microprocessor keeps on controlling the head/s to lower to tend towards the nominal instruction value, and wherein if the average rotational speed decreases below Vr, lowering is stopped to be only resumed when the cut resistance decreases.

5. A movable robotic mowing device according to claim 1 comprising at least two cutting heads (10).

6. A movable robotic mowing device according to claim 1 or 2 comprising at least three cutting heads (10).

7. Device as claimed in claim 1, **characterized in that** the cutting head/s (10) comprises a rotating disk (3) with retractable blades and having an abutment (4) under the lower face in the form of a central extension adapted to contact the ground.

8. Use of a device according to any of the claims 1 to 6 to mow golf course fairways.

## Patentansprüche

1. Bewegliche selbstgesteuerte Vorrichtung zum Rasenmähen, mit einem Mikroprozessor und wenigstens einem Schneidkopf (10) und mit eiem elastischen Element (13) zum Aufbringen einer Spannung, das einerseits mit dem Chassis der Vorrichtung und andererseits mit dem wenigstens einen Schneidkopf (10) verbunden ist, **dadurch gekennzeichnet, daß** die Schneidhöhe des Schneidkopfes oder der Schneidköpfe (10) auf automatische Weise zentralisiert durch einen Algorithmus eingestellt wird, der durch den besagten Mikroprozessor ausgeführt wird und der den Drehwiderstand der Schneidplatte (3) und/oder die Position der Vorrichtung bezüglich der besagten Oberfläche berücksichtigt, und zwar derart, daß der Rasenmäher den Rasen nie kürzer als eine vorgegebene Höhe schneidet.

2. Vorrichtung gemäß Anspruch 1, bei der der Mikroprozessor mit einem Element zur Bestimmung der Position der Vorrichtung hinsichtlich einer vorgegebenen Arbeitsoberfläche verbunden ist und automatisch die Schneidhöhe des Schneidkopfes oder der Schneidköpfe (10) wenigstens in Abhängigkeit von dieser Position einstellt.

3. Vorrichtung gemäß Anspruch 2, **dadurch gekennzeichnet, daß** die Position durch ein Element zur Messung der Intensität eines Magnetfeldes bestimmt wird, das durch einen begrenzenden Faden zur Abgrenzung der Arbeitsoberfläche emittiert wird.

4. Vorrichtung gemäß Anspruch 1, bei der der durch den Mikroprozessor realisierte Algorithmus ein Verfahren zur automatischen Einstellung der Schneidhöhe umfaßt bei dem bei der Durchführung des Mähvorganges der Mikroprozessor das Anheben des Schneidkopfes oder der Schneidköpfe (10) auf eine maximale Höhe steuert, wobei diese dann nach und nach herabgesetzt wird, wobei der Mikroprozessor stetig die mittlere Rotationsgeschwindigkeit der Schneidplatte oder der Schneidplatten (3) erfaßt und, sobald diese höher als ein vorgegebener Wert Vr ist, wobei der Wert der Geschwindigkeit der Schneidköpfe entspricht (10), die eine Rasenhöhe schneidet, die nicht überschritten werden darf, der Mikroprozessor kontinuierlich die Herabsetzung der Schneidköpfe (10) derart einleitet, daß ein Nennwert erreicht wird und daß, wenn die durchschnittliche Rotationsgeschwindigkeit unterhalb Vr absinkt, die Herabsetzung angehalten wird und erst wieder aufgenommen wird, wenn der Widerstand der Schneidplatte zurückgegangen ist.

5. Bewegliche selbstgesteuerte Mähvorrichtung gemäß Anspruch 1, die wenigstens zwei Schneidköpfe (10) umfaßt.

6. Vorrichtung gemäß Anspruch 1 oder 2, bei der wenigstens drei Schneidköpfe (10) vorgesehen sind.

7. Vorrichtung gemäß einem der vorhergehenden Ansprüche, **dadurch gekennzeichnet, daß** der oder die Schneidköpfe (10) aus einer rotierenden Platte (3) mit einziehbaren Messern bestehen, die an ihrer Unterseite einen Anschlag (4) in einer Form einer zentralen Verlängerung aufweist, die geeignet ist, in Kontakt mit dem Boden zu gelangen.

8. Verwendung einer Vorrichtung gemäß einem der Ansprüche 1 bis 6 für das Mähen der Fairways eines Golfplatzes.
